# EUROPÄISCHE PATENTSCHRIFT

(11) **EP 4 599 980 B1**
(45) Veröffentlichungstag und Bekanntmachung des Hinweises auf die Patenterteilung: **04.11.2026**
(21) Anmeldenummer: 25165395.2
(22) Anmeldetag: 28.08.2019
(51) Int. Cl.: B23Q 1/00

(54) **SPANNVORRICHTUNG**
CLAMPING DEVICE
DISPOSITIF DE SERRAGE

(30) Priorität: 28.08.2018 EP 18191070
(43) Veröffentlichungstag der Anmeldung: 13.08.2025
(62) Dokumentnummer(n) der früheren Anmeldung(en) nach Art. 76 EPÜ: 19194182.2 / 3 616 831
(73) Patentinhaber: HVM Technology GmbH, 28876 Oyten (DE)
(72) Erfinder: Henke, Volker, 28876 Oyten (DE); Meier, Matthias, 28876 Oyten (DE); Viets, Henrico, 27404 Elsdorf (DE)
(74) Vertreter: Eisenführ Speiser

(56) Entgegenhaltungen:
- US-A1- 2004 256 780
- US-B1- 9 902 033

## Beschreibung

Die Erfindung betrifft eine Spannvorrichtung, insbesondere zum Spannen von Werkstücken zur spanenden Bearbeitung.

In der verarbeitenden Industrie, insbesondere in der metallverarbeitenden Industrie, kommen Bearbeitungsmaschinen wie Bohr- oder Fräsmaschinen zum Einsatz. Damit diese Maschinen präzise arbeiten können, benötigen sie exakte Referenzpunkte. Daher ist es in der Praxis relevant, einen Werkstückträger wiederholt genau spannen zu können. Dazu ist es erforderlich, den betreffenden Werkstückträger in Bezug auf sechs Freiheitsgrade, d. h. in drei Linearkoordinaten X, Y und Z und drei Drehachsen (Drehung um die X-Achse, Y-Achse bzw. Z-Achse) präzise positionieren zu können. Ist die Werkstückaufspannung im Rahmen einer Werkstückbearbeitung vorzunehmen, müssen häufig erhebliche auf das Werkstück einwirkende Kräfte berücksichtigt, d. h. von der Spanneinrichtung aufgenommen werden, ohne dass sich das Werkstück verlagert. Die betreffenden Spanneinrichtungen müssen deshalb robust ausgebildet sein. Die Kraftübertragung zwischen einzelnen Elementen kann hier nicht punktuell erfolgen, weil dies zu Werkstoffüberlastungen an der Spanneinrichtung und somit zu Verformungen führen würde. Oft ist ein schneller Wechsel notwendig, so dass die Verspannung schnell und einfach lösbar sein und wieder feststellbar sein muss.

Aus DE 101 55 077 B4 ist eine Spannvorrichtung nach dem Oberbegriff des Anspruchs 1 bekannt, bei der eine Spannplatte auf einer Bezugsebenenplatte verspannt werden kann. Die Spannvorrichtung weist eine ebene Spannfläche, die eine Bezugsebene festlegt, und wenigstens zwei Spannöffnungen mit Wandungen auf. An den Wandungen ist jeweils wenigstens eine Bezugsfläche ausgebildet. Die Spannvorrichtung dient dem Verspannen einer Spannplatte, die eine auf die Spannfläche aufzusetzende ebene Grundfläche und wenigstens zwei Spann- und Positionierbolzen aufweist. Die Spann- und Positionierbolzen sind den Spannöffnungen zugeordnet und weisen jeweils eine Positionierfläche auf, die einer der Bezugsflächen zugeordnet ist. Weiterhin weist die Spannvorrichtung eine Festzieheinrichtung auf, die dazu eingerichtet ist, die Spann- und Positionierbolzen mit einer Axialkraft und einer überlagerten Radialkraft zu beaufschlagen. Mittels der Axialkraft ist die Grundfläche der Spannplatte gegen die Spannfläche der Bezugsebenenplatte pressbar und mittels der Radialkraft sind die Spann- und Positionierbolzen mit ihren Positionierflächen gegen die Bezugsflächen pressbar.

Diese bekannte Spannvorrichtung weist jedoch mehrere Nachteile auf. Zum einen ist eine komplexe Kraftumleitung mit zahlreichen Spannbacken notwendig, um es dem Nutzer zu ermöglichen, die Verspannung zu lösen oder festzuziehen. Entsprechend liegen viele Reibflächen vor, an denen die Kräfte umgeleitet werden. Die Reibflächen erhöhen das Risiko, dass sich Bauteile ungewollt gegeneinander verklemmen. Die hohe Anzahl der Bauteile bzw. die komplexe Bezugsebenenplatte erhöhen die Kosten der Herstellung. Weiterhin findet nicht immer eine automatische Zentrierung der zu verspannenden Spann-und Positionierbolzen statt, so dass eine optimale Präzision der Verspannung nicht erreicht werden kann.

Aus US 9 902 033 B1 ist eine weitere Spannvorrichtung bekannt. Bei der Spannvorrichtung der US 9 902 033 B1 ist eine Antriebsspindel für zwei gegenüberliegende Spannbacken mittels zweier Metallstifte in ihrem Gehäuse fixiert und in Längsrichtung eingeschränkt beweglich. Das schränkt die Nutzbarkeit der Spannvorrichtung erheblich ein, weil die Spannvorrichtung es erforderlich macht, dass sämtliche Spannöffnungen mit korrespondierenden Spannbolzen belegt werden, weil andernfalls eine Spannbewegung der Spindel eine Scherbelastung auf diese Stifte ausübt. Das ist mechanisch ungünstig und kann zu Bauteilversagen führen.

Der vorliegenden Erfindung stellt sich somit die Aufgabe, eine Spannvorrichtung zum präzisen und einfachen Verspannen von Werkstücken oder Werkstückhaltern aufzuzeigen, die eine präzise Verspannung ermöglicht und günstig in der Herstellung ist.

Erfindungsgemäß wird diese Aufgabe durch eine gattungsgemäße Spannvorrichtung gelöst, bei der vorgesehen ist, dass die Festzieheinrichtung zwei Spannbacken und ein Spannmittel aufweist. Das Spannmittel und die Spannbacken sind entlang einer einzigen festgelegten Bewegungsachse frei verschiebbar. Dabei ist je Spann- und Positionierbolzen eine Kraftübertragungsfläche an einer der Spannbacken vorgesehen. Jeder Spann- und Positionierbolzen weist eine Kraftaufnahmefläche zum Zusammenwirken mit einer der Kraftübertragungsflächen auf. Die Kraftübertragungsflächen der Spannbacken sind mit den Kraftaufnahmeflächen der Spann- und Positionierbolzen in Kontakt bringbar und dadurch sind die Axialkräfte und die Radialkräfte auf die Positionierbolzen aufbringbar.

Die Verschiebbarkeit des Spannmittels und der Spannbacken ist insbesondere so ausgeführt, dass das Spannmittel unmittelbar und ausschließlich mit den Spannbacken in Wirkverbindung steht, um diese aufeinander zu oder voneinander fort zu bewegen. Erfindungsgemäß ist das Spannmittel frei in der Spannvorrichtung bewegbar, was so zu verstehen ist, dass das Spannmittel keine Lagerung, Lagefixierung oder sonstige unmittelbare Kopplung mit der Spannvorrichtung aufweist, sondern lediglich über die Spannbacken innerhalb der Spannvorrichtung positionell bestimmt ist. Das Maß der Verschiebbarkeit wird lediglich über die Grenzen bestimmt, die den Spannbacken innerhalb des Gehäuses der Spannvorrichtung auferlegt sind, beispielsweise mittels Endanschlägen. Die Genauigkeit des Spannvorgangs wird über die Verspannung der Spann- und Positionierbolzen durch die Spannbacken bereits erreicht, so dass auf eine zusätzliche Festlegung des Spannmittels verzichtet werden kann. Statische Überbestimmtheiten oder Installationsprobleme werden erfindungsgemäß hierdurch reduziert. Ein weiterer wesentlicher Vorteil liegt darin, dass gemäß der Erfindung stets zuverlässig gespannt wird, ungeachtet dessen, ob sämtliche Spannöffnungen mit Spann-und Positionierbolzen belegt sind oder nicht, da der Bewegungsspielraum des Spannmittels durch die Bewegbarkeit der Spannbolzen definiert wird.

Mindestens eine der Spannbacken kann dabei zwei Kraftübertragungsflächen aufweisen. Weiterhin können die Axialkräfte und die Radialkräfte mittels des Spannmittels bei einer Bewegung der beiden Spannbacken aufeinander zu oder voneinander weg auf die Spann-und Positionierbolzen aufbringbar sein.

Dazu kann das Spannmittel der Spanneinrichtung eine Zugkraft oder eine Druckkraft zwischen den beiden Spannbacken übertragen.

Alternativ kann eine Zugkraft oder eine Druckkraft zwischen einer der Spannbacken und der Bezugsebenenplatte übertragen werden.

Die Spannplatte kann zwei, drei, vier oder mehr Spann- und Positionierbolzen aufweisen.

Die Bezugsebenenplatte kann eine entsprechende Anzahl von Spannöffnungen aufweisen, oder mehr, um die Aufnahme unterschiedlicher Spannplatten zu ermöglichen.

Die Bezugsebenenplatte der Spannvorrichtung kann mehrere Sätze von Spannöffnungen aufweisen. So kann die Spanneinrichtung verschiedene Spannplatten mit unterschiedlich beabstandeten Spann- und Positionierbolzen aufnehmen.

Die Bezugsebenenplatte weist vorzugsweise einen ersten Satz von Spannöffnungen in einem ersten Raster mit einem Rasterabstand A x A auf, und einen zweiten Satz von Spannöffnungen in einem zweiten Raster mit einem Rasterabstand B x B, wobei der Rasterabstand B x B des zweiten Rasters verschieden ist von dem Rasterabstand A x A des ersten Rasters. Das ermöglicht es, mittels der entsprechenden Raster unterschiedliche Spannplattenformate aufzunehmen.

Das Spannmittel weist ein Gewinde auf.

Eine der Spannbacken weist ein Gegengewinde zu dem Gewinde des Spannmittels auf.

Erfindungsgemäß ist das Krafterzeugungsmittel als Spindel ausgebildet, welche wenigstens ein Gewinde aufweist, und derart mit den beiden Spannbacken wirkverbunden ist, dass eine Rotation der Spindel eine Bewegung der Spannbacken in Richtung der Bewegungsachse aufeinander zu oder voneinander fort bewirkt. Die Spindel weist einen Spindelkörper auf, an dessen einem Ende das Gewinde angeordnet ist, welches in Eingriff mit einem Gewinde der ersten Spannbacke steht, und an dessen gegenüberliegendem Ende ein Kopfabschnitt ausgebildet ist, der einen relativ zu dem Spindelkörper vergrößerten Durchmesser aufweist, und mit einer Anlagefläche an der zweiten Spannbacke anliegt. Diese Ausführungsform weist einen mechanisch äußerst einfachen, daher robusten und zugleich fertigungsgünstigen Aufbau auf, welcher die Einfachheit des erfindungsgemäßen Konzepts unterstreicht.

Mit anderen Worten: Eine der Spannbacken kann eine Durchgangsbohrung für das Spannmittel aufweisen und die andere Spannbacke kann das Gegengewinde aufweisen. Das Spannmittel kann an einem Ende einen Anschlag, der an einem Ende der Durchgangsbohrung anliegt, und an dem anderen Ende das Gewinde aufweisen, das mit dem Gegengewinde in Eingriff steht. Durch Rotation des Spannmittels können die Spannbacken aufeinander zu oder voneinander weg bewegbar sein.

Die Spannfläche kann eben und durchgehend ausgebildet sein. Dabei kann sie ausschließlich durch die Spannöffnungen unterbrochen sein. Entsprechend stellt sie eine zusammenhängende Fläche dar.

Die Spann- und Positionierbolzen können eine solche Größe und Position aufweisen, dass sie, wenn sie in entspanntem Zustand in die Spannöffnungen ragen, mit ihren Positionierflächen von den Bezugsflächen entfernt sind. Dies ermöglicht ein einfaches Einsetzen der Spann- und Positionierbolzen in die Spannöffnungen. Außerdem ermöglicht das Spiel, dass die Spann- und Positionierbolzen von der Festzieheinrichtung automatisch zentriert werden. Entsprechend ist es vorteilhaft, wenn die Spann- und Positionierbolzen in Bezug auf die Spannöffnungen ein Untermaß aufweisen.

Weiterhin können die Spann- und Positionierbolzen in Radialrichtung federnd ausgebildet sein. Wenn die Spann- und Positionierbolzen entlang ihrer Radialrichtung federnd ausgebildet sind, kann das Spiel überbrückt werden und eine geometrische Überbestimmung der Spannvorrichtung verhindert werden. Entsprechend ist es vorteilhaft, wenn der maximale Federhub der Spann- und Positionierbolzen größer ist als der Abstand der Positionierflächen der Spann- und Positionierbolzen von den Bezugsflächen aufgrund des genannten Spiels.

Die Bezugsflächen der Spannöffnungen und die Positionierflächen der Spann- und Positionierbolzen können jeweils zylindrisch gewölbt sein.

Die Radialkräfte können jeweils eine erste Kraftkomponente parallel zu der Bewegungsachse und eine zweite Kraftkomponente orthogonal zu der Bewegungsachse haben.

Die Spannvorrichtung kann über einen ersten Satz Spannöffnungen zum Aufnehmen der Spann- und Positionierbolzen einer ersten Spannplatte mit ersten Abständen zwischen den Spann- und Positionierbolzen und über einen zweiten Satz Spannöffnungen zum Aufnehmen der Spann- und Positionierbolzen einer zweiten Spannplatte mit zweiten Abständen zwischen den Spann- und Positionierbolzen verfügen.

Beide Spannbacken können jeweils vier Kraftübertragungsflächen aufweisen. Zwei erste Kraftübertragungsflächen jeder Spannbacke können dabei mit den Kraftaufnahmeflächen der Spann- und Positionierbolzen der ersten Spannplatte in Kontakt bringbar sein. Dazu können die Spann- und Positionierbolzen der ersten Spannplatte mit dem ersten Satz Spannöffnungen in Eingriff stehen. Außerdem können jeweils zwei zweite Kraftübertragungsflächen jeder der Spannbacken mit den Kraftaufnahmeflächen der Spann- und Positionierbolzen der zweiten Spannplatte in Kontakt bringbar sein. Dazu können die Spann- und Positionierbolzen der zweiten Spannplatte mit dem zweiten Satz Spannöffnungen in Eingriff stehen. Mit anderen Worten weist jede Spannbacke ein erstes Paar Kraftübertragungsflächen auf, die mit dem ersten Rasterabstand R_{A} des ersten Satzes von Spannöffnungen korrespondieren, und ein zweites Paar Kraftübertragungsflächen, die mit dem zweiten Rasterabstand R_{B} des zweiten Satzes von Spannöffnungen korrespondieren.

Die Kraftübertragungsflächen und die Kraftaufnahmeflächen stehen im verspannten Zustand an einer Kontaktfläche miteinander in Kontakt. An der Kontaktfläche ist eine in Richtung einer Flächennormale der Kontaktfläche weisende Kraft übertragbar, wobei die Kraft die Vektorsumme einer Radialkraft und einer Axialkraft ist. Die Kraft schließt einen ersten Winkel mit einer parallel zu der Bewegungsachse und orthogonal zu der Bezugsebene angeordneten Vertikalebene ein, und sie schließt einen zweiten Winkel mit der Bezugsebene ein.

Bevorzugt beträgt der erste Winkel zwischen 20° und 70°, 30° und 60° oder zwischen 40° und 50°. In einer weiter bevorzugten Ausführungsform kann der erste Winkel 45° betragen. Der zweite Winkel kann zwischen 20° und 70°, zwischen 30° und 60° oder bevorzugt 45° betragen.

Die Spann- und Positionierbolzen können im Wesentlichen zylinderförmig sein.

Die Spann- und Positionierbolzen können Kontaktaussparungen aufweisen, die die Kraftaufnahmeflächen der Spann- und Positionierbolzen bilden.

Eine Kontaktaussparung kann keilförmig sein oder sich umlaufend über den Umfang eines zylinderförmigen Spann- und Positionierbolzens erstrecken. Die Kontaktaussparung kann auf einer, zwei oder drei Seiten eines jeden der Spann- und Positionierbolzen vorgesehen sein. Bei einer solchen Ausführungsform verläuft eine Längsachse einer Kontaktaussparung nicht umlaufend entlang des Umfangs eines zylinderförmigen Spann-und Positionierbolzens, sondern tangential zu diesem. Bei einer keilförmigen Kontaktaussparung bietet dies den Vorteil, dass eine verhältnismäßig große, ebene Kontaktfläche zwischen der Kraftübertragungsfläche der Spannbacke und der Kraftaufnahmefläche des Spann- und Positionierbolzens vorhanden ist. Demgegenüber kommt es bei einer umlaufenden, kegelstumpfförmigen Kontaktaussparung zu einem im Wesentlichen linienförmigen Kontakt zwischen der Kraftaufnahmefläche und der Kraftübertragungsfläche.

Zum einfachen Abheben der Spannplatte von der Bezugsebenenplatte können in den Spannöffnungen Abhebefedern, bspw. Tellerfedern, vorgesehen sein. Die Abhebefedern drücken entgegen der Axialkraft gegen die Spann- und Positionierbolzen. Wird die Verspannung gelöst und somit die Axialkraft von den Spann- und Positionierbolzen genommen, drücken die Abhebefedern die Spann- und Positionierbolzen und damit die Spannplatte von der Bezugsebenenplatte weg.

Die Spannvorrichtung verfügt über genau zwei Spannbacken, die mit einem einzigen Spannmittel, wie oben beschrieben, gegen die Spann- und Positionierbolzen drückbar sind. So kann eine Spannvorrichtung realisiert werden, die mit besonders wenigen Bauteilen auskommt.

In einer bevorzugten Ausführungsform weist die Spannvorrichtung für jede Spannbacke eine Rückstellfeder auf, die derart mit ihrer jeweiligen Spannbacke wirkverbunden ist, dass die Spannbacken gegen die Rückstellkraft der Rückstellfedern aufeinander zu bewegt werden. Der Vorteil dieser Gestaltung liegt in einer besseren Haptik. In dem Stadium, in dem die Spann- und Positionierbolzen nicht mehr fest verspannt sind, hat das Spannmittel erfindungsgemäß Spiel, und zwar umso mehr, je weiter die Spannbacken voneinander fort gefahren werden. Die Rückstellfedern sorgen dafür, dass das Spannmittel stets eine definierte Ruheposition entlang der Bewegungsachse einnimmt. Vorzugsweise erstrecken sich die Rückstellfedern entlang des Spindelkörpers des Spannmittels, und sind weiter vorzugsweise als Schraubenfedern mit identischer Federsteifigkeit ausgebildet.

Weiter vorzugsweise weist die Spannvorrichtung für eine, mehrere oder sämtliche der Spannöffnungen eine in der Öffnung vorgesehene Abhebefeder auf, welche dazu eingerichtet ist, den Spann- und Positionierbolzen entgegen seiner Einführungsrichtung aus der Spannöffnung zumindest partiell heraus zu drücken, sobald der Verspannungszustand zwischen den Spannbacken und den Spann- und Positionierbolzen aufgehoben wird. Die Abhebefeder ist vorzugsweise als elastisch verformbares Element ausgebildet, beispielsweise als Elastomer-Ring oder als Tellerfeder.

In einer bevorzugten Ausführungsform weist die Spannvorrichtung eine Bezugsebenenplatte, zwei Spannbacken, ein Spannmittel, zwei Rückstellfedern (bspw. Spiralfedern), und eine Abhebefeder (bspw. Tellerfeder) je Spannöffnung auf.

Durch den besonders einfachen Aufbau und den möglichen Einsatz von Normteilen ist eine besonders kostengünstige Herstellung der Spannvorrichtung möglich.

Die Axialkräfte, die die Spannplatte gegen die Bezugsebenenplatte drücken, verlaufen in Richtung der Längsachsen der Spann- und Positionierbolzen. Sie sind durch den zweiten Winkel, den die Flächennormale der Kontaktfläche zwischen den Kraftübertragungsflächen und Kraftaufnahmeflächen mit der Bezugsebene bildet, bestimmt. Außerdem wird die Radialkraft als radiale Kraftkomponente von den Spannbacken auf die Spann- und Positionierbolzen übertragen. Diese wirkt in radialer Richtung in Bezug auf die Längsachsen der Spann- und Positionierbolzen und somit parallel zu der Bezugsebene. Dabei können die Radialkräfte in der Bezugsebene unter einem vorgebbaren Winkel zur Bewegungsachse A wirken. In einer bevorzugten Ausführungsform sind die Kraftübertragungsflächen an abgeschrägten Kanten der Spannbacken vorgesehen. In diesem Fall hängen die Wirkrichtungen der Radialkräfte von dem ersten Winkel ab, der im Wesentlichen einem Winkel entspricht, den die abgeschrägten Kanten mit der Bewegungsachse bilden. Die Radialkräfte einer Spannbacke können parallel zur Bewegungsachse A sein, zu dieser konvergierend oder von dieser divergierend angeordnet sein.

Dabei weisen Ausführungsformen mit O- oder X-förmig (divergierend oder konvergierend) angeordneten Kraftwirkungslinien den Vorteil auf, dass die Spann- und Positionierbolzen bzw. die Spannplatte automatisch zentrierend verspannt werden.

Da eine Spannbacke über mehrere Spannflächen verfügen kann, ist es möglich verschiedene Spannplatten in ein und derselben Spannvorrichtung zu verspannen, auch wenn die Spannplatten unterschiedlich beabstandeten Spann- und Positionierbolzen aufweisen. Dies erhöht die Flexibilität und die Einsatzmöglichkeiten der Spannvorrichtung. Bevorzugt weist jede Spannbacke entweder zwei oder vier Kraftübertragungsflächen auf, wobei jeweils zwei Kraftübertragungsflächen pro Spannbacke einem Satz Spann- und Positionierbolzen zugeordnet sein können.

In einer bevorzugten Ausführungsform können die Spannöffnungen bzw. die Spann- und Positionierbolzen auf einem festgelegten Raster angeordnet sein. Das Raster kann quadratisch oder rechteckförmig sein. Dies ermöglicht eine modulare Anwendung und vielseitige Einsatzmöglichkeiten. Zum Beispiel können die Spannplatten auf der Bezugsebenenplatte ohne großen Aufwand um 90° oder 180° gedreht werden. Es ist auch möglich, dass eine Bezugsebenenplatte eine Vielzahl (mehr als Spann- und Positionierbolzen pro Spannplatte) von Spannöffnungen in einem entsprechenden Raster aufweist, auch wenn die verwendeten Spannplatten z.B. nur vier Positionierbolzen aufweisen. Dann ist die Position der Spannplatte auf der Bezugsebenenplatte in Stufen wählbar. In einer bevorzugten Ausführungsform betragen die Rasterabstände zwischen den Spannöffnungen 52 mm und/oder 96 mm. Weist eine Bezugsebenenplatte Spannöffnungen mit unterschiedlichen Rasterabständen auf, um Spannplatten mit unterschiedlich beabstandeten Spann- und Positionierbolzen aufzunehmen, können diese Spannöffnungen unterschiedliche Durchmesser aufweisen, um Spann- und Positionierbolzen mit unterschiedlichen Durchmessern aufzunehmen.

Das Spannmittel kann einen mechanischen, pneumatischen, hydraulischen oder elektromotorischen Antrieb aufweisen.

In einer weiteren bevorzugten Ausführungsform weist die Spannvorrichtung eine gegenüber der Spannfläche angeordnete Gehäuseabdeckung auf, welche reversibel lösbar mit der Spannvorrichtung verbunden ist, und mittels welcher die Ausnehmungen für die Spannbacken und das Spannmittel zugänglich sind. Diese Ausführungsform hat fertigungstechnische Vorteile insbesondere bei Spannvorrichtungen mit flacher Bauform. Die Ausnehmungen für Spannbacken und Spannmittel (Antriebsspindel), sind als Taschen ausgebildet, die mittels der Gehäuseabdeckung verschlossen werden. Dadurch, dass die Gehäuseabdeckung auf der der Spannfläche abgewandten Seite angeordnet ist, können die Spannbacken und das Spannmittel nicht ungewollt manipuliert oder entfernt werden, solange die Spannvorrichtung auf einer Werkzeugmaschine montiert ist.

Die Erfindung wird nachfolgend anhand verschiedener Ausführungsbeispiele erläutert, wobei auf eine Zeichnung Bezug genommen wird.
- Figur 1.1: zeigt eine erste Ausführungsform einer erfindungsgemäßen Spannvorrichtung in einer perspektivischen Ansicht;
- Figur 1.2: zeigt die Spannvorrichtung aus Figur 1.1 in einer Draufsicht;
- Figur 1.3: zeigt die Spannvorrichtung aus Figur 1.1 in einer Seitenansicht;
- Figur 1.4: zeigt die Spannvorrichtung aus Figur 1.1 in einer Frontansicht;
- Figur 1.5: zeigt die Spannvorrichtung aus Figur 1.1 in einer Explosionsdarstellung;
- Figur 1.6: zeigt eine erfindungsgemäße Kräfteaufteilung der Spannkräfte in der Spannvorrichtung;
- Figur 2.1: zeigt eine zweite Ausführungsform einer erfindungsgemäßen Spannvorrichtung in einer perspektivischen Ansicht;
- Figur 2.2: zeigt die Spannvorrichtung aus Figur 2.1 in einer Draufsicht;
- Figur 2.3: zeigt die Spannvorrichtung aus Figur 2.1 in einer Seitenansicht;
- Figur 2.4: zeigt die Spannvorrichtung aus Figur 2.1 in einer Frontansicht;
- Figur 3.1: zeigt eine dritte Ausführungsform einer erfindungsgemäßen Spannvorrichtung in einer perspektivischen Ansicht;
- Figur 3.2: zeigt die Spannvorrichtung aus Figur 3.1 in einer Draufsicht;
- Figur 3.3: zeigt die Spannvorrichtung aus Figur 3.1 in einer Seitenansicht;
- Figur 3.4: zeigt die Spannvorrichtung aus Figur 3.1 in einer Frontansicht;
- Figur 4.1: zeigt eine Ausführungsform der erfindungsgemäßen Spannvorrichtung mit einer Spannplatte mit Spann- und Positionierbolzen in einer Frontansicht;
- Figur 4.2: zeigt die Spannvorrichtung aus Figur 4.1 in einer Draufsicht;
- Figur 4.3: zeigt die Spannvorrichtung aus Figur 4.1 in einer perspektivischen Ansicht;
- Figur 4.4: zeigt eine Detailansicht der Spannvorrichtung aus Figur 4.4;
- Figur 4.5: zeigt die Spannvorrichtung aus Figur 4.1 in einer Explosionsdarstellung;
- Figur 5: zeigt eine Spannvorrichtung aus dem Stand der Technik.

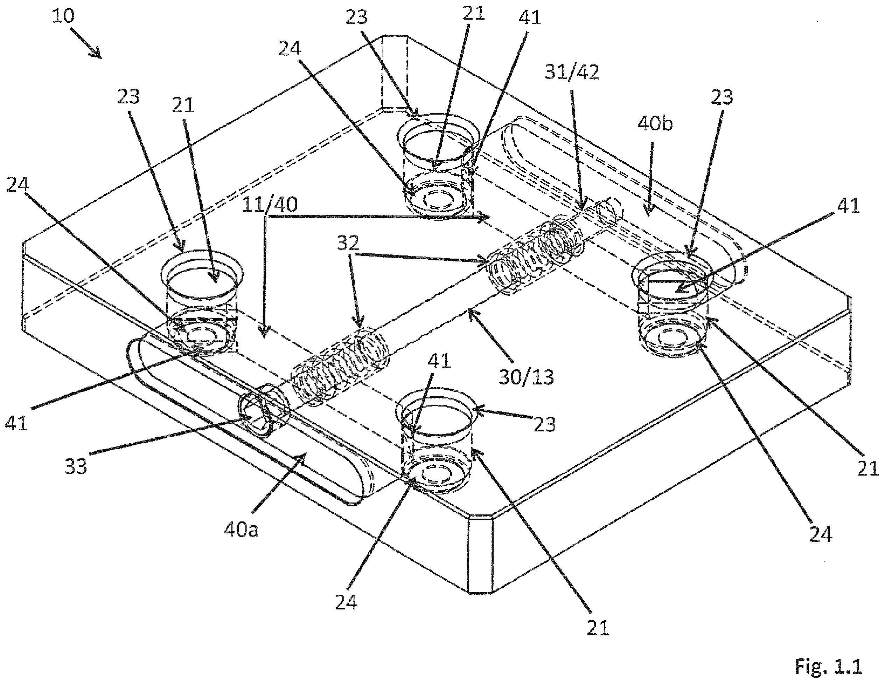

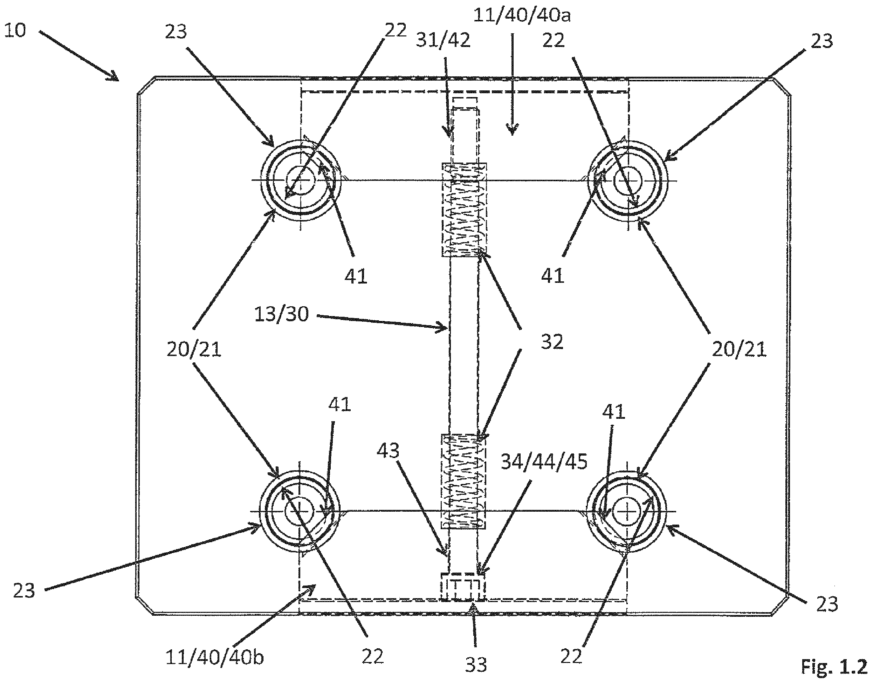

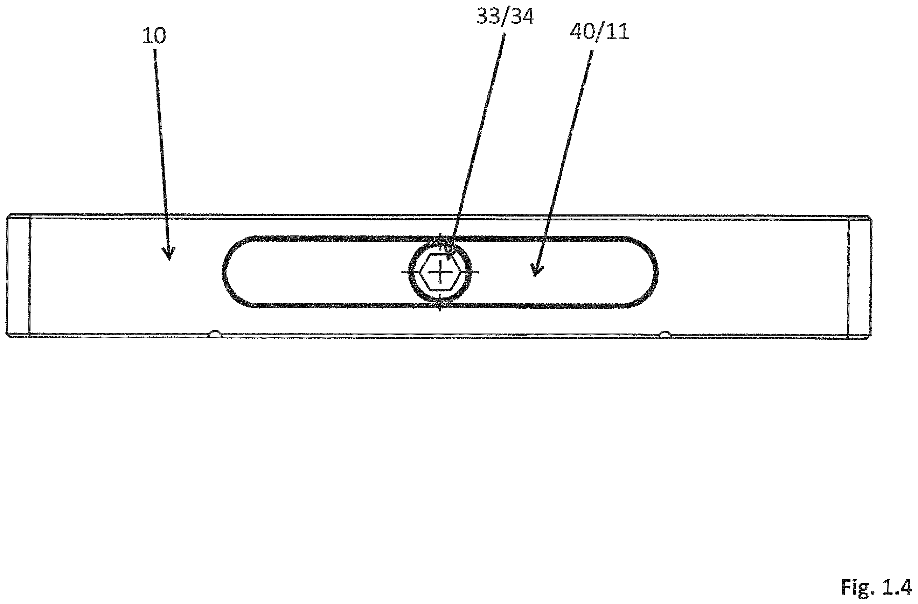

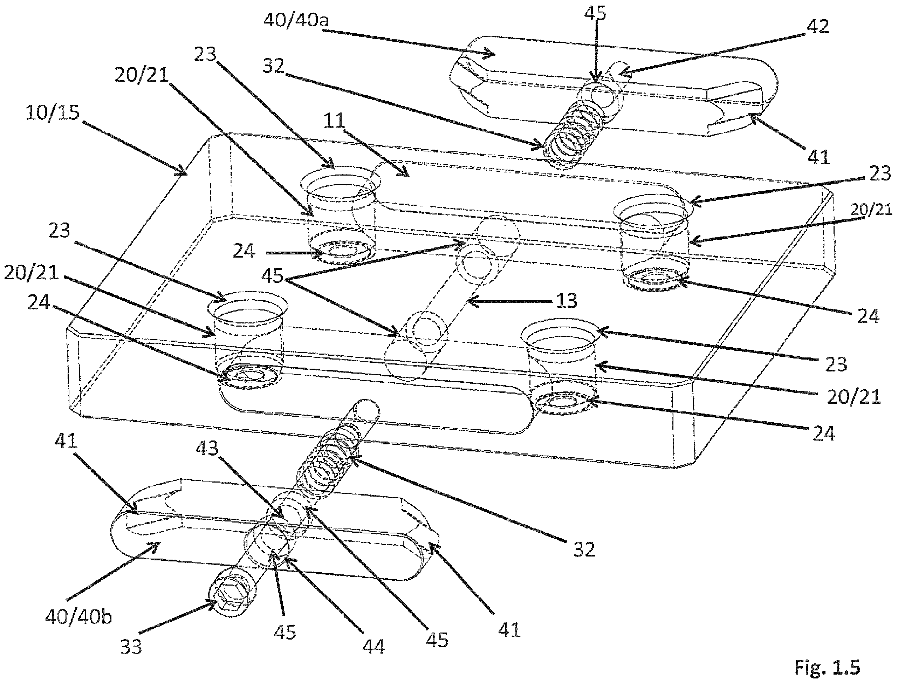

In den Figuren 1.1 bis 1.5 ist eine erste Ausführungsform der Erfindung dargestellt. Dabei bildet eine Oberseite einer Bezugsebenenplatte 10 eine Spannfläche 15, mit der eine Bezugsebene festgelegt ist. Die Bezugsebenenplatte 10 weist zwei Aussparungen 11 zur Bildung von Führungen auf. Die Aussparungen 11 sind an gegenüberliegenden Seiten der Bezugsebenenplatte 10 eingelassen. Die Aussparungen 11 stehen in Verbindung mit vier Spannöffnungen 20, die sich von der Spannfläche 15 aus orthogonal zu der Spannfläche 15 in die Bezugsebenenplatte 10 erstrecken. Die beiden Aussparungen 11 sind über eine Durchgangsbohrung 13 miteinander verbunden.

In beiden Aussparungen 11 ist jeweils eine Spannbacke 40 entlang einer Bewegungsachse A verschieblich geführt. Beide Spannbacken 40 weisen je zwei Kraftübertragungsflächen 41 auf. Jede Kraftübertragungsfläche 41 wird durch einen keilförmigen Vorsprung gebildet, der sich von der Spannbacke 40 erstreckt. Dabei reichen die die Kraftübertragungsflächen 41 bildenden keilförmigen Vorsprünge der Spannbacken 40 in die Spannöffnungen 20 der Bezugsebenenplatte 10, wenn die Spannbacken 40 über ein Spannmittel 30 zu einander bewegt werden. Das Spannmittel 30 ist dazu durch die Durchgangsbohrung 13 der Bezugsebenenplatte 10 geführt. Das Spannmittel 30 ist ein Bolzen, der an einem Ende ein Außengewinde 31 und am gegenüberliegenden Ende einen Schraubenkopf 34 mit Innensechskant 33 aufweist. Dabei weist eine der Spannbacken 40a eine Durchgangsbohrung 43 auf, durch die das Spannmittel 30 geführt ist. Die Durchgangsbohrung 43 der Spannbacke 40a weist an beiden Enden der Spannbacke 40a einen vergrößerten Querschnitt auf, so dass an beiden Enden Aufnahmeerweiterungen 45 gebildet sind. In der in Bezug zu der Bezugsebenenplatte 10 nach außen gewandten Aufnahmeerweiterung 45 kann der Schraubenkopf 34 aufgenommen werden. Wird das Spannmittel 30 angezogen, dient das Ende der Aufnahmeerweiterung 45 als Anschlag 44 für den Schraubenkopf 34, sodass eine Kraft vom Spannmittel 30 auf die Spannbacke 40a übertragen werden kann. Die andere Aufnahmeerweiterung 45 dient zur Aufnahme einer Rückstellfeder 32, die die Spannbacke 40a nach außen drückt (also von den Spannöffnungen 20 weg, aus der Aussparung 11 heraus), wenn durch das Spannmittel 30 die Zugkraft zwischen den Spannbacken 40 gelöst wird.

Um die Rückstellfedern 32 aufzunehmen, weist auch die Durchgangsbohrung 13 der Bezugsebenenplatte 10 an beiden Enden eine Aufnahmeerweiterung 45 für die Rückstellfedern 32 auf. Entsprechend ist auch auf der gegenüberliegenden Seite an der Spannbacke 40b eine Rückstellfeder 32 vorgesehen. Analog zu der Spannbacke 40a weist auch die Spannbacke 40b eine entsprechende Aufnahmeerweiterung 45 an dem Durchlass für das Spannmittel 30 auf. Der Durchlass der Spannbacke 40b für das Spannmittel 30 weist anschließend an die Aufnahmeerweiterung 45 für die Rückstellfeder 32 ein Innengewinde 42 auf. Das Innengewinde 42 der Spannbacke 40b steht dabei in Eingriff mit dem Außengewinde 31 des Spannmittels 30, sodass sich durch eine Rotation des Spannmittels 30 das Spannmittel 30 und die Spannbacke 40b translatorisch zueinander verschieben. Da sich der Schraubenkopf 34 an der anderen Spannbacke 40a abdrückt, bewegt sich auch die Spannbacke 40a relativ zu dem Spannmittel 30 und der Spannbacke 40b. Die Spannbacken 40 werden also auf einer Bewegungsachse A, parallel zur Bezugsebene 15 verschoben. Bei einem rechtsgängigen Außengewinde 31 werden die beiden Spannbacken 40 durch eine Rechtsdrehung des Spannmittels 30 entsprechend aufeinander zu bewegt, so dass sich Federkräfte in den Rückstellfedern 32 aufbauen. Wird das Spannmittel 30 umgekehrt nach links gedreht, werden die Spannbacken 40 von den Rückstellfedern 32 auseinandergedrückt.

Die Spannöffnungen 20 weisen an der Spannfläche 15 der Bezugsebenenplatte 10 eine Einführungsfase 23 auf, so dass die Spann- und Positionierbolzen 110 einfacher in die Spannöffnungen 20 der Bezugsebenenplatte 10 eingeführt werden können. Außerdem weisen die Spannöffnungen 20 einen Axialanschlag 24 an ihrer Unterseite auf, gegen den die Spann- und Positionierbolzen 110 beim Verspannen in axialer Richtung gedrückt werden können. Bevorzugt sind die Axialanschläge 24 als Tellerfedern ausgeführt. Da der Anschlag in axialer Richtung eigentlich an zwischen der Spannfläche 15 und der Grundfläche 101 erfolgt, ist ein fester/ unelastischer axialer Anschlag zwischen den Spann-und Positionierbolzen und der Bezugsebenenplatte zu vermeiden. Um ein einfaches Abheben der Spannplatte 100 von der Bezugsebenenplatte 10 zu ermöglichen, kann jedoch über einen federnden Axialanschlag 24 die Spannplatte 100 nach dem Lösen des Spannmittels 30 automatisch leicht angehoben werden.

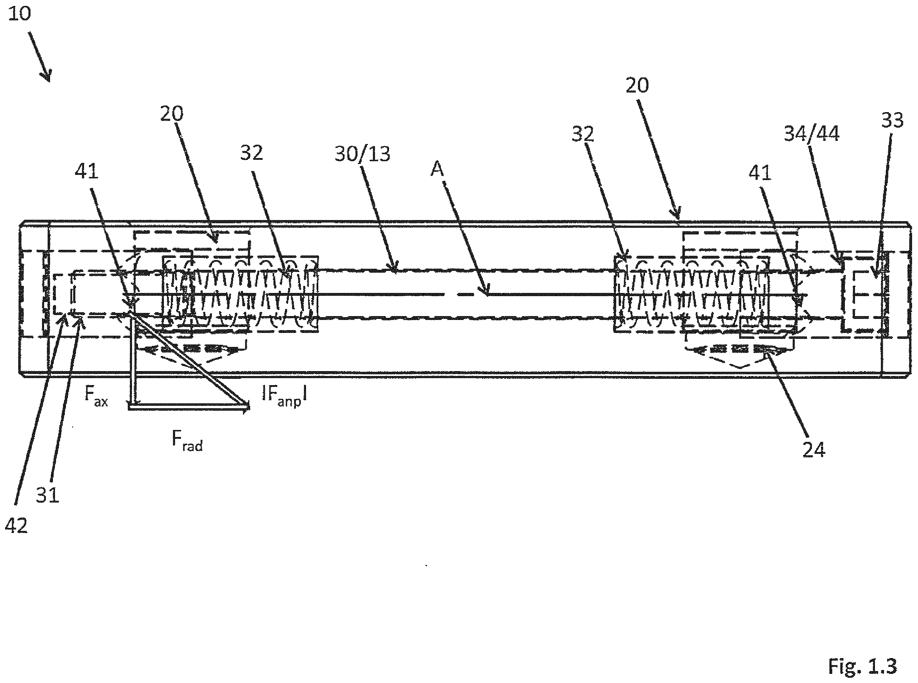

Werden die Spann- und Positionierbolzen 110 in die Spannöffnungen 20 eingeführt, und das Spannmittel 30 so gedreht, dass die Spannbacken 40 aufeinander zu gezogen werden, greifen die keilförmigen Vorsprünge der Spannbacken, die die Kraftübertragungsflächen 41 bilden, in dafür vorgesehene Kontaktaussparungen 114 der Spann- und Positionierbolzen 110, die die Kraftaufnahmeflächen 111 bilden. Bevorzugt stehen dabei nur die unteren Flächen der keilförmigen Vorsprünge und die oberen Flächen der Kontaktaussparungen 114 in Kontakt miteinander. Durch einen zweiten Winkel, den die Kontaktflächen zwischen den Keilen und den Kontaktaussparungen 114 mit der Bezugsebene 10 einschließen, ergibt sich die anteilige Aufteilung von Anpresskräften F_{Anp} in Radialkräfte F_{rad} und Axialkräfte Fₐₓ, die auf die Spann- und Positionierbolzen übertragen werden (wie insbesondere in Fig. 1.3 dargestellt).

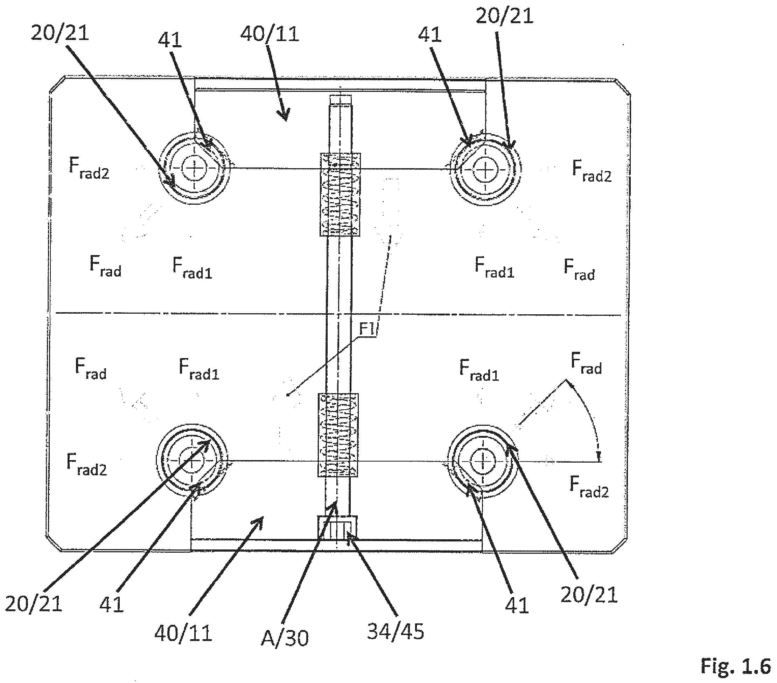

Abgeschrägte Kanten der Spannbacken 40, an denen die Keile angeordnet sind, weisen in der dargestellten Ausführungsform einen ersten Winkel zu der Bewegungsachse A auf. Der erste Winkel gibt vor, wie die Radialkraft F_{rad} in eine parallel zur Bewegungsachse A gerichtete Horizontalkraft F_{rad1} und eine senkrecht zur Bewegungsachse A gerichtete Horizontalkraft F_{rad2} aufgeteilt wird. Im dargestellten Beispiel sind die Keile bzw. Kraftübertragungsflächen 41 der Spannbacken schräg zur Bewegungsachse A angeordnet, wobei eine Flächennormale eine Komponente parallel zur Bewegungsachse A zur Mitte der Bezugsebenenplatte hin und eine Komponente senkrecht dazu zur Außenseite der Spannplatte 100 hin aufweist. Daraus ergibt sich eine O-förmige Anordnung der resultierenden Radialkräfte F_{rad} auf die Spann- und Positionierbolzen 110 (siehe insbesondere Figur 1.6), die eine zentrierende Wirkung auf die Spannplatte hat.

Die Aussparungen 11 der Bezugsebenenplatte 10 sind einfach und kostengünstig zu fertigen, da sie von außen in die Bezugsebenenplatte 10 eingebracht werden können.

Die bevorzugte und hier auch dargestellte Form der Bezugsebenenplatte 10 ist rechteckig. Dabei ist die Ausdehnung der Bezugsebene 15 (also Länge und Breite der Bezugsebenenplatte 10) im Vergleich zu der dazu orthogonalen Dicke der Bezugsebenenplatte 10 wesentlich größer. Dies ermöglicht einen ausreichenden Abstand der Spann- und Positionierbolzen 110 voneinander, der notwendig ist, um die Spannplatte 100 ausreichend fest und präzise zu verspannen. Die Seitenflächen der Bezugsebenenplatte 10 sind bevorzugt ebene, gerade und rechtwinklig zueinander angeordnet. Dies erleichtert die Nullpunktnahme mittels Fräsmaschinen oder ähnlichen Bearbeitungsmaschinen.

Der Zug- oder Druckkraft F₁, die über das Spannmittel 30 auf die Spannbacken 40 übertragen wird, wirkt die Federkräfte der Rückstellfedern 32 und die Anpresskräfte F_{Anp} der Spann- und Positionierbolzen entgegen.

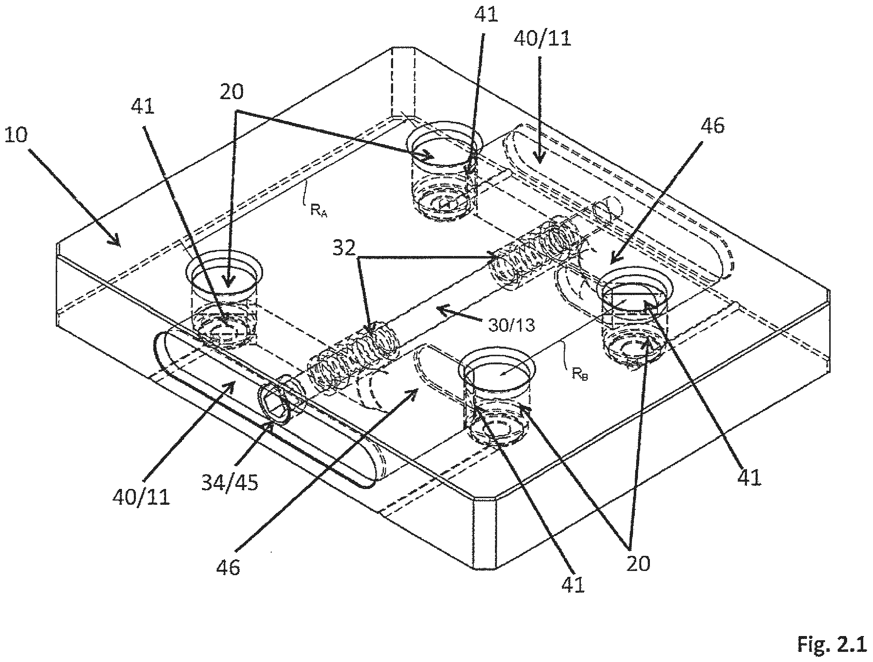

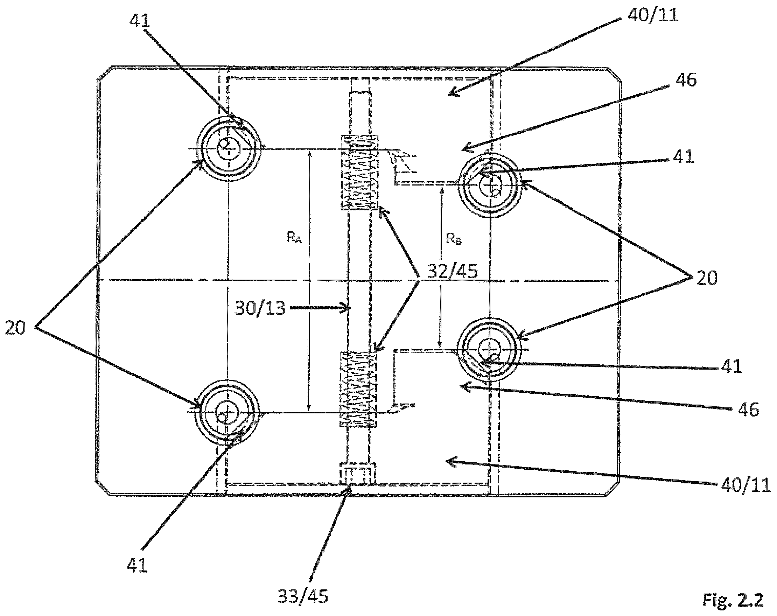

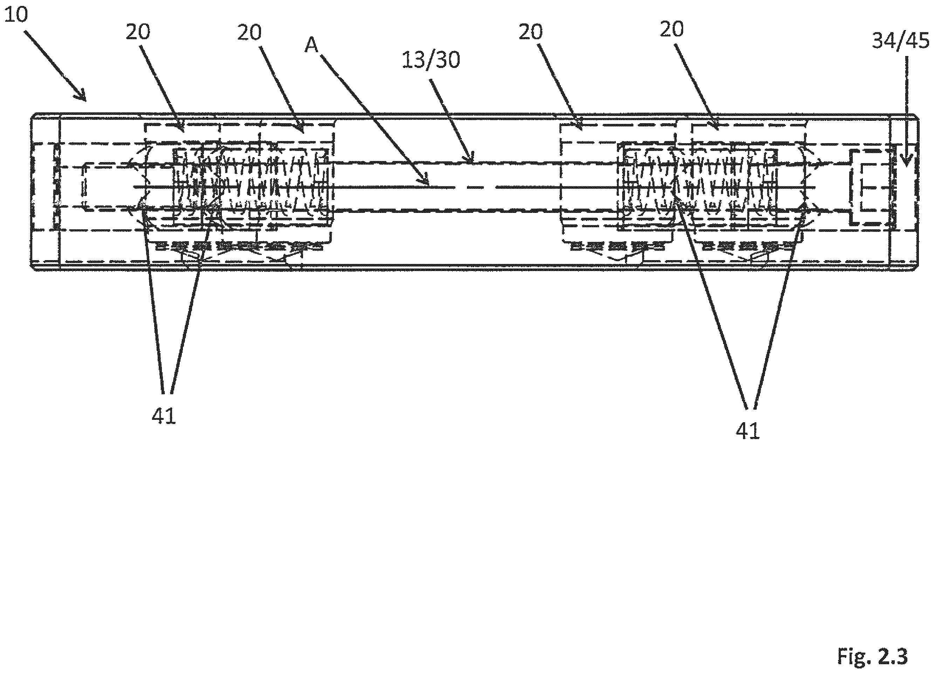

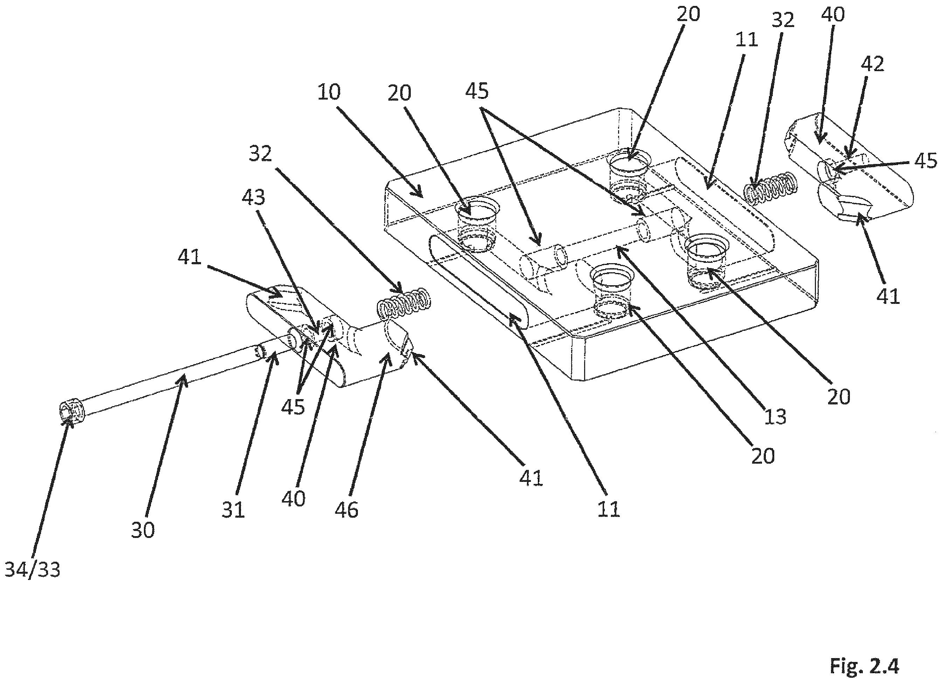

Wie die Figuren 2.1-2.4 zeigen, müssen die Spann- und Positionierbolzen 110 nicht zwangsläufig symmetrisch angeordnet sein. In der dargestellten Ausführungsform sind die Spann- und Positionierbolzen 110 bzw. die Spannöffnungen auf einer Seite (links in Fig. 2.1) in einem ersten Abstand R_{A} angeordnet, und die Spann- und Positionierbolzen (bzw. Spannöffnungen) auf der anderen Seite (rechts in Fig. 2.1) sind in einem zweiten Abstand R_{B} angeordnet, wobei R_{B} < R_{A} ist. Dadurch sind hier die rechten Spannöffnungen und -bolzen parallel zur Bewegungsachse A nach innen/zur Mitte der Bezugsebenenplatte 10 hin versetzt. Dies kann mit einfachen Mitteln über einen seitlichen Absatz 46 an den Spannbacken 40 realisiert werden.

In der Praxis kann es besonders vorteilhaft sein, Spannvorrichtungen für unterschiedliche Spannplatten 100 (unterschiedlicher Hersteller) anbieten zu können. Daher ist es vorteilhaft, eine große Flexibilität und Spannweite an Geometrien anbieten zu können.

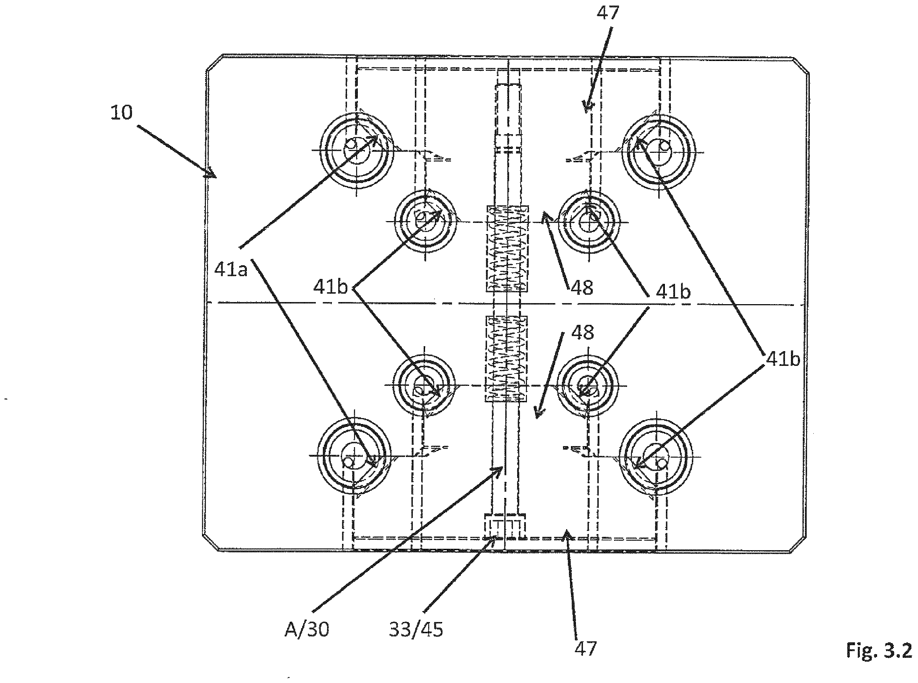

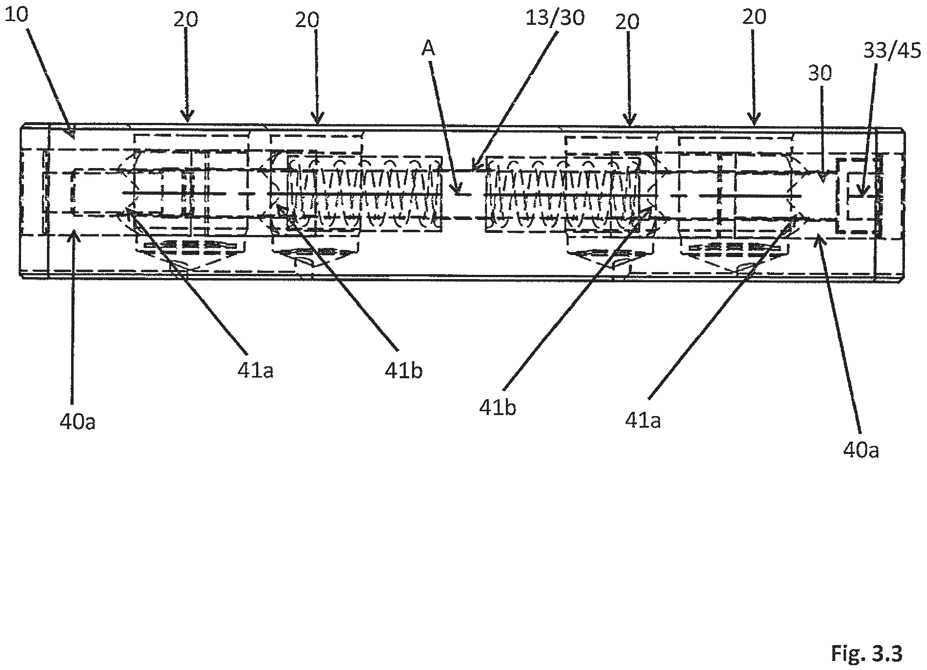

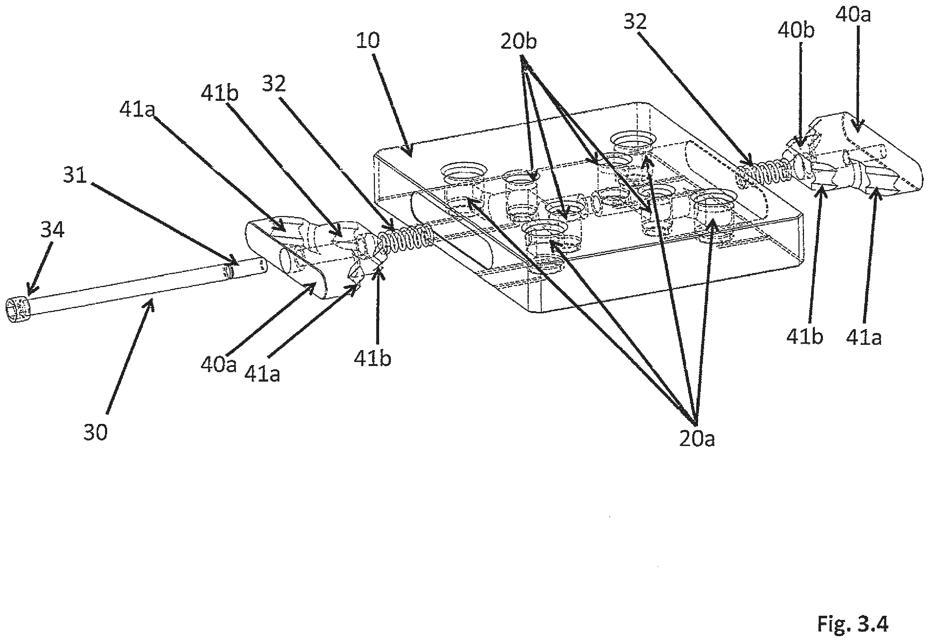

In den Figuren 3.1-3.4 ist eine Ausführungsform der Erfindung dargestellt, in der verschiedene Spannplatten 100 mit unterschiedlich beabstandeten Spann- und Positionierbolzen 110 verspannt werden können. Dazu weist die Bezugsebenenplatte 10 zwei Sätze von Spannöffnungen 20 in einem jeweiligen Raster auf. Ein erster Satz von Spannöffnungen 20a ist für Spannplatten 100 mit ersten Abständen R_{A} in einem Raster R_{A} x R_{A} zwischen den zu verspannenden Spann- und Positionierbolzen 110 ausgelegt, und ein zweiter Satz von Spannöffnungen 20b ist für Spannplatten 110 mit zweiten Abständen R_{B} in einem Raster R_{B} x R_{B} zwischen den Spann- und Positionierbolzen 110 vorgesehen. In der dargestellten Ausführungsform sind die ersten Abstände R_{A} sowohl zwischen den ersten Spannöffnungen 20a parallel zu der Bewegungsachse A als auch orthogonal zu der Bewegungsachse A höher als die zweiten Abstände zwischen den zweiten Spannöffnungen 20b. Außerdem weisen in der dargestellten Ausführungsform beide Sätze von Spannöffnungen 20a, 20b unterschiedliche Durchmesser der Spannöffnungen 20 auf. So können nicht nur Spannplatten 100 mit unterschiedlich beabstandeten Spann- und Positionierbolzen 110 verwendet werden, sondern auch Spannplatten mit Spann- und Positionierbolzen 110 mit unterschiedlichen Durchmessern. Alternativ zu der dargestellten Ausführungsform ist es auch möglich, dass die Spannöffnungen 20a des ersten Satzes von Spannöffnungen nur in einer Richtung (also entweder in paralleler Richtung oder in orthogonale Richtung zur Bewegungsachse A) geringer beabstandet sind als die Spannöffnungen 20b des zweiten Satzes von Spannöffnungen.

Die Spannbacken 40 sind im dargestellten Beispiel stufenförmig aufgebaut. Eine erste Stufe 46 weist zwei erste Kraftübertragungsflächen 41a an zwei ersten abgeschrägten Kanten mit zwei ersten Keilen auf, die mit Kraftaufnahmeflächen des ersten Satzes an Spann- und Positionierbolzen in Kontakt bringbar sind. Eine zweite Stufe 47 weist zwei zweite Kraftübertragungsflächen 41b an zwei zweiten abgeschrägten Kanten mit zwei zweiten Keilen auf, die mit Kraftaufnahmeflächen 111 des zweiten Satzes an Spann- und Positionierbolzen 110 in Kontakt bringbar sind. Die erste Stufe 46 ist entlang der Richtung der Bewegungsachse A von der zweiten Stufe 47 zur Mitte der Bezugsebenenplatte 10 hin abgesetzt.

Wird der erste Satz an Spann- und Positionierbolzen verwendet, kommen die ersten Kraftübertragungsflächen 41a der ersten Stufe 46 der Spannbacken 40 in Kontakt mit den Kraftaufnahmeflächen 111 des ersten Satzes der Spann- und Positionierbolzen 110. Die zweiten Kraftübertragungsflächen 41b der zweiten Stufe 47 der Spannbacken 40 stehen dabei in keinerlei Kontakt zu Spann- und Positionierbolzen 110. Die abgeschrägten Kanten der zweiten Stufe 47 der Spannbacken 40 greifen in die leeren Spannöffnungen 20b des zweiten Satzes von Spannöffnungen 20b. Somit liegt dort genügend Spiel vor, um eine erforderliche Kraft auf den ersten Satz von Spann- und Positionierbolzen 110 zu erzeugen.

Wird der zweite Satz an Spann- und Positionierbolzen 110 verwendet, kommen die zweiten Kraftübertragungsflächen 41b der zweiten Stufe 47 der Spannbacken 40 in Kontakt mit den Kraftaufnahmeflächen 111 des zweiten Satzes der Spann- und Positionierbolzen 110. Die ersten Kraftübertragungsflächen 41a der ersten Stufe der Spannbacken 40 stehen dabei in keinerlei Kontakt zu Spann- und Positionierbolzen 110. Die abgeschrägten Kanten der ersten Stufe 46 der Spannbacken 40 greifen in die leeren Spannöffnungen des ersten Satzes von Spannöffnungen 20a. Somit liegt dort genügend Spiel vor, um eine erforderliche Kraft auf den zweiten Satz von Spann- und Positionierbolzen 110 zu erzeugen.

Die jeweils nicht verwendeten Spannöffnungen 20 können mittels Verschlusskappen verschlossen werden, um zu verhindern, dass Späne oder sonstige Verunreinigungen in die Spannöffnungen 20 gelangen.

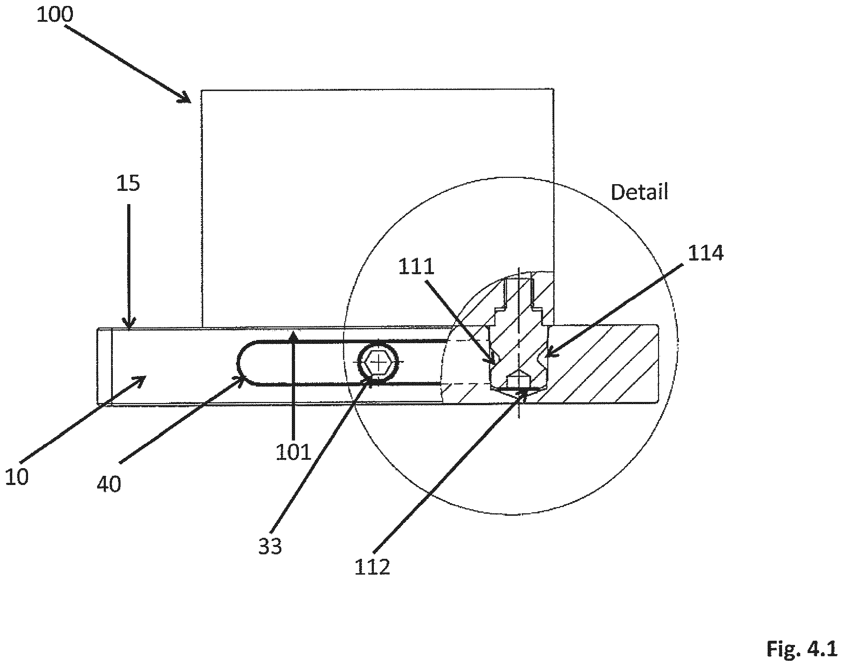

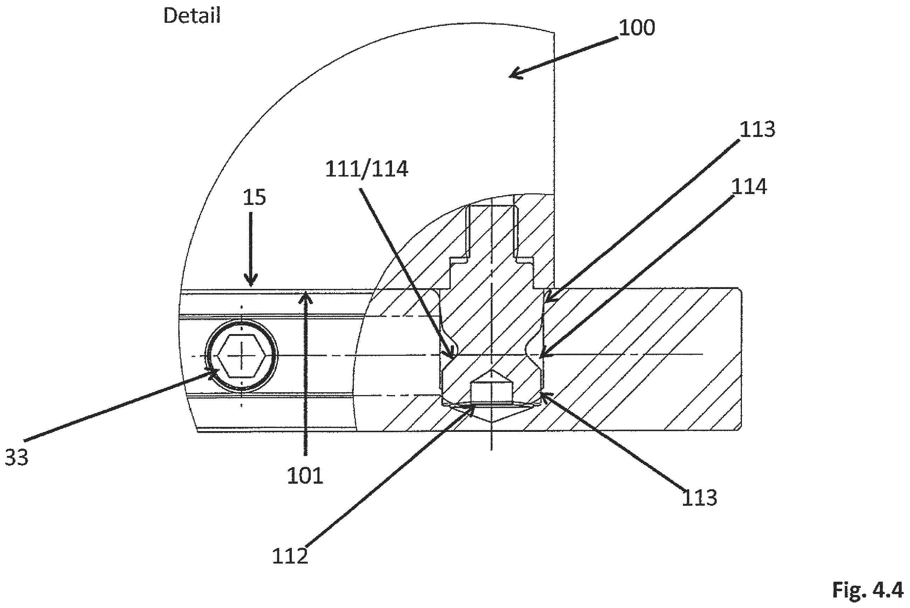

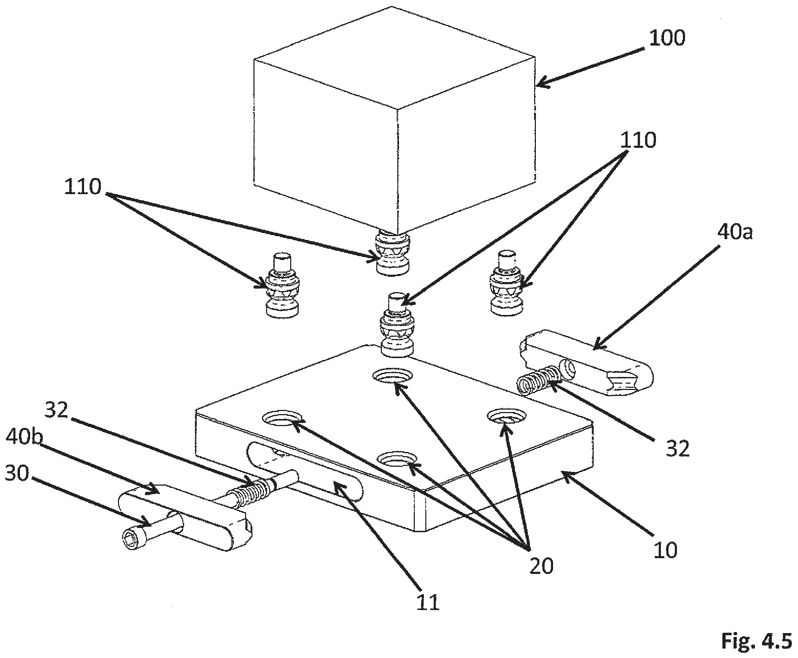

In den Figuren 4.1 bis 4.5 ist die Spannvorrichtung inklusive der Spannplatte 100 mit den Spann- und Positionierbolzen 110 dargestellt.

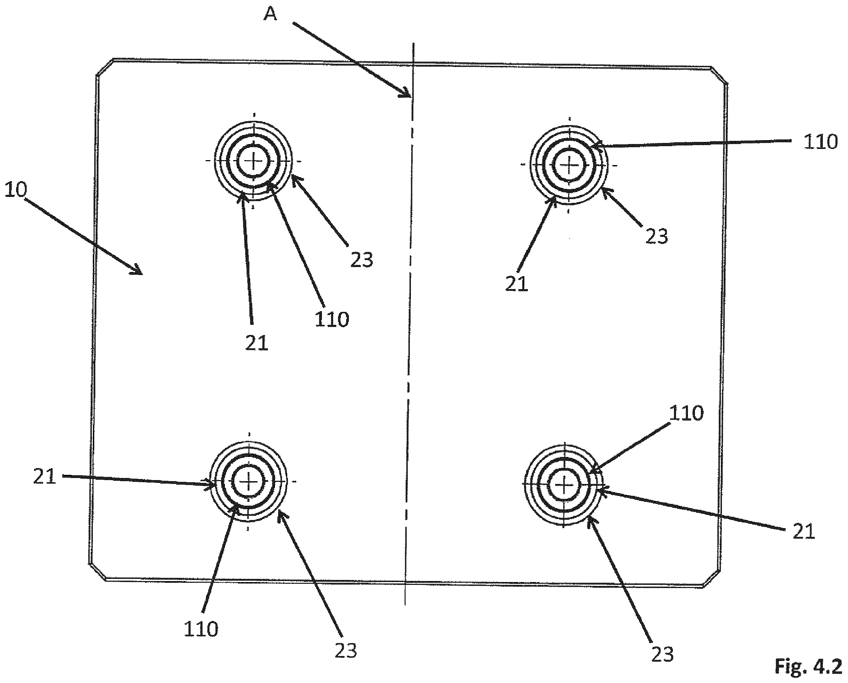

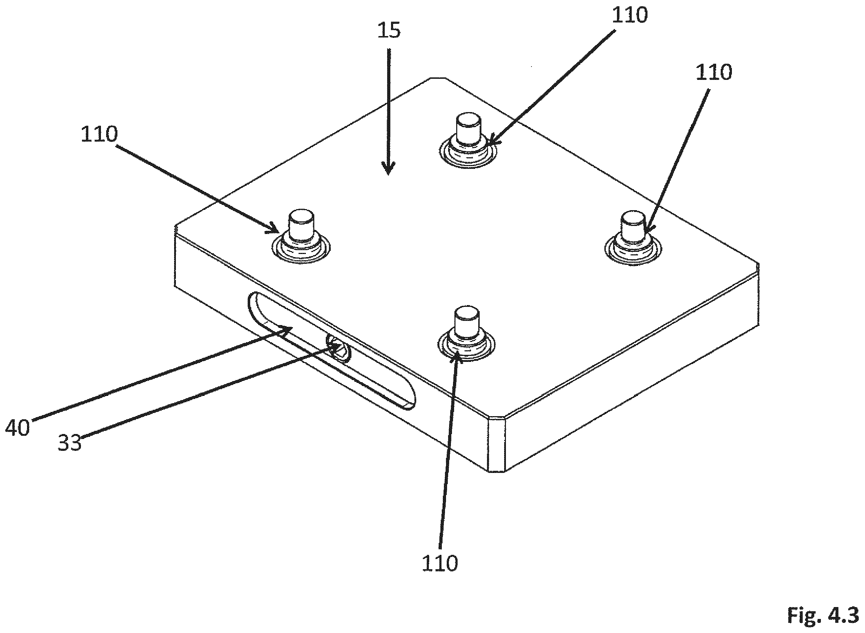

Die Spann- und Positionierbolzen 110 können kraftschlüssig, formschlüssig oder stoffschlüssig mit der Spannplatte 100 verbunden sein. Im dargestellten Fall sind die Spann- und Positionierbolzen über eine Gewindeverbindung mit der Spannplatte 100 verbunden. Wie insbesondere in den Figuren 4.2 und 4.3 erkennbar ist, weisen die Spann-und Positionierbolzen etwas Spiel gegenüber den Spannöffnungen 20 der Bezugsebenenplatte auf. Dies erleichtert das Einführen der Spann- und Positionierbolzen in die Spannöffnung 20. Werden die Spannbacken 40 über das Spannmittel 30 angezogen, werden die Positionierflächen 113 der Spann- und Positionierbolzen 110 gegen die Bezugsflächen 22 der Wandung 21 der Bezugsebenenplatte 10 gedrückt. Dazu greifen die keilförmigen Vorsprünge der Spannbacken 40 in die keilförmigen Kontaktaussparungen 114 der Spann- und Positionierbolzen 110, so dass die Kraftübertragungsflächen 41 in Kontakt mit den Kraftaufnahmeflächen 111 der Spann- und Positionierbolzen 110 kommen. Ein Axialanschlag 112 der Spann- und Positionierbolzen drückt dabei auf einen elastischen Axialanschlag 24 am unteren Ende der Spannöffnung 20. Durch das Festziehen der Spannbacken werden die Spann- und Positionierbolzen und die Spannplatte 100 leicht nach unten gezogen. So wird eine Kraft im unteren Axialanschlag 24 der Spannöffnung 20 gespeichert und die Grundfläche 101 der Spannplatte 100 gegen die Spannfläche 15 der Bezugsebenenplatte 10 gepresst. Werden die Spannbacken 40 gelöst, so drückt der elastische Axialanschlag die Spann-und Positionierbolzen und somit auch die Spannplatte 100 wieder nach oben. Im dargestellten Fall ist die keilförmige Kontaktaussparung 114 der Spann- und Positionierbolzen 110 umlaufend ausgestaltet. Alternativ können die Spann- und Positionierbolzen 110 jedoch auch an einer oder mehreren Seiten tangential verlaufende Aussparungen aufweisen.

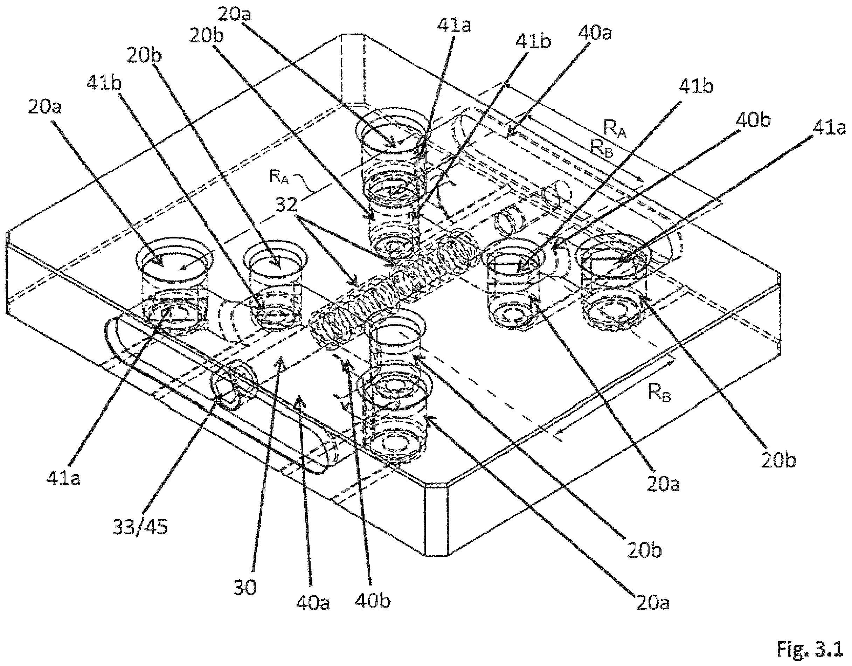

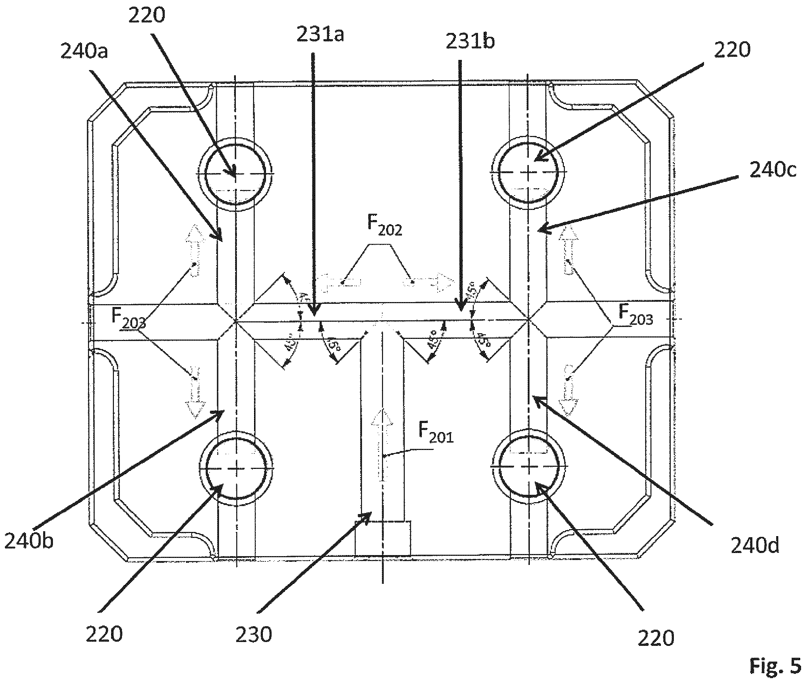

Figur 5 zeigt erläuterungshalber eine Spannvorrichtung aus dem Stand der Technik. Dabei wird über ein Spannmittel 230 einer Druckkraft FS1 aufgebaut, die über mehrere Übertragungsbolzen 231a, 231b, 240a, 240b, 240c, 240d zu den Spannbolzen einer Spannplatte geleitet wird, die sich in den Spannöffnungen 220 befinden. So entsteht jeweils eine Kontakt- oder Kraftübertragungsfläche zwischen dem Spannmittel 230 und den Übertragungsbolzen 240a, 240b, 240c und 240d. An jeder der Übertragungsflächen besteht die Möglichkeit einer Verkantung oder Verspannung der aneinandergreifenden Elemente. Außerdem entsteht jeweils ein Kraftverlust durch Reibung. Die Kraftübertragung erfolgt jeweils in einem 90° Winkel, so dass die Radialkräfte auf die Spannbolzen parallel zu der Achse des Spannmittels 230 und zu der aufgebrachten Druckkraft F201 wirken. Entsprechend werden die Kräfte bereits zweimal umgeleitet, bevor sie auf die Spannbolzen übertragen werden. Druckkraft F₂₀₁ wird in die Übertragungskräfte F₂₀₂ aufgeteilt und die Übertragungskräfte F₂₀₂ werden in die Übertragungskräfte F₂₀₃ aufgeteilt. Auch an den Spannbolzen kann es in der dargestellten Form leicht zu einer Verklemmung/Verkantung/Verspannung kommen, da die Spannbolzen jeweils parallel zueinander gegen die Wandungen der Spannöffnungen 220 gedrückt werden. Da die Radialkräfte, die auf die Spannbolzen wirken, parallel sind, findet keine automatische Zentrierung statt. Dies wird durch eine erfindungsgemäße Aufteilung der Radialkräfte in Längs- und Querkomponenten verhindert, wie bspw. in Figur 1.6 dargestellt, wobei die Kräfteausrichtung dazu führt, dass die Spann- und Positionierbolzen selbsttätig zentrierend verspannt werden. Die in Fig. 5 dargestellte Spannvorrichtung benötigt viele einzelne Übertragungsbolzen und Bohrungen, wodurch die Herstellung und Montage aufwendig und teuer ist, und ermöglicht nicht eine Nutzung unterschiedlicher Spannplatten wie bei einer Spannvorrichtung nach Fig. 3.1 bis 3.4, da die Übertragungsbolzen 240a, 240b, 240c und 240d eine einzige festgelegte Länge haben.

In den vorstehend beschriebenen Figuren sind jeweils seitlich an der Spannvorrichtung taschenartige Ausnehmungen vorgesehen, in welche die Spannbacken und das Spannmittel eingeschoben werden. Diese Art der Montage bietet sich insbesondere für Spannvorrichtungen mit hoher Bauform an. Bei Spannvorrichtungen mit flacher Bauform, so wie den hier gezeigten Bauformen, ist es alternativ auch bevorzugt, die Ausnehmungen der Spannbacken so weit von der Spannfläche beabstandet anzuordnen, dass die Ausnehmungen durch Öffnen eines Gehäusedeckels an der zur Spannfläche gegenüberliegend angeordneten Seite zugänglich werden. Die Spannbacken und das Spannmittel (Spindel), können dann vormontiert werden und einfach in die Ausnehmungen eingesetzt werden, bevor die Gehäuseabdeckung dann verschlossen wird. Die geometrischen Gegebenheiten der gezeigten Figuren werden hierdurch ansonsten nicht beeinflusst, so dass mit Ausnahme der nicht dargestellten Gehäuseabdeckung das Vorstehende entsprechend auch für eine solche bevorzugte Ausführungsform gilt.

### Bezugszeichenliste

- 10: Bezugsebenenplatte
- 11: Aussparung
- 13: Durchgangsbohrung
- 15: Spannfläche/Bezugsebene
- 20: Spannöffnung
- 20a: erster Satz Spannöffnungen
- 20b: zweiter Satz Spannöffnungen
- 21: Wandung
- 22: Bezugsfläche
- 23: Einführungsfase
- 24: Axialanschlag
- 30: Spannmittel
- 31: Kraftumwandler/Außengewinde/Gewinde
- 32: Kraftspeicher/Rückstellfeder
- 33: Kraftanschlussstelle/Innenachtkant
- 34: Schraubenkopf/Anschlag
- 40/40a/40b: Spannbacken
- 41: Kraftübertragungsfläche
- 41a: erste Kraftübertragungsfläche
- 41b: zweite Kraftübertragungsfläche
- 42: Kraftumwandler/Innengewinde/Gegengewinde
- 43: Durchgangsbohrung
- 44: Anschlagsfläche
- 45: Aufnahmeerweiterungen
- 46: seitlicher Absatz
- 47: erste Stufe
- 48: zweite Stufe
- 50: Festzieheinrichtung
- 100: Spannplatte
- 101: Grundfläche
- 110: Spann- und Positionierbolzen
- 111: Kraftaufnahmeflächen
- 112: Axialanschlag
- 113: Positionierfläche
- 114: (keilförmige) Kontaktaussparung

- 220: Spannöffnung
- 230: Spannmittel
- 231a, 231b: Übertragungsbolzen
- 240a - 240d: Übertragungsbolzen

- A: Bewegungsachse

- F₁: Zug-/Druckkraft
- Fₐₙₚ: Anpresskraft
- Fₐₓ: Axialkraft
- F_{rad}: Radialkraft
- F_{rad1}, F_{rad2}: Radialkraftanteil
- F₂₀₁: Druckkraft
- F₂₀₂: Übertragungskraft
- F₂₀₃: Übertragungskraft

## Patentansprüche

1. Spannvorrichtung, insbesondere zum Spannen von Werkstücken zur spanenden Bearbeitung, mit einer Bezugsebenenplatte (10), die eine ebene Spannfläche (15), die eine Bezugsebene festlegt, und wenigstens zwei Spannöffnungen (20) mit Wandungen (21) aufweist, an denen jeweils wenigstens eine Bezugsfläche (22) ausgebildet ist,
wobei die Spannvorrichtung dem Verspannen einer Spannplatte (100) dient, die eine auf die Spannfläche (15) aufzusetzende ebene Grundfläche (101) und wenigstens zwei Spann- und Positionierbolzen (110) aufweist, die den Spannöffnungen (20) zugeordnet sind und die jeweils eine Positionierfläche (113) aufweisen, die den Bezugsflächen (22) zugeordnet sind,
und mit einer Festzieheinrichtung (50), die dazu eingerichtet ist, die Spann- und Positionierbolzen (110) mit einer Axialkraft (Fₐₓ) und einer überlagerten Radialkraft (F_{rad}) zu beaufschlagen,
wobei mittels der Axialkraft (Fₐₓ) die Grundfläche (101) der Spannplatte (100) gegen die Spannfläche (15) der Bezugsebenenplatte (10) pressbar ist und mittels der Radialkraft (F_{rad}) die Spann- und Positionierbolzen (110) mit ihren Positionierflächen (113) gegen die Bezugsflächen (22) drückbar ist,
wobei die Festzieheinrichtung (50) zwei Spannbacken (40) und ein als Spindel ausgebildetes Spannmittel (30) aufweist,
wobei für jeden Spann- und Positionierbolzen (110) eine Kraftübertragungsfläche (41) an einer der Spannbacken (40) vorgesehen ist, wobei jeder Spann- und Positionierbolzen (110) eine Kraftaufnahmefläche (111) zum Zusammenwirken mit einer der Kraftübertragungsflächen (41) aufweist, wobei die Kraftübertragungsflächen (41) der Spannbacken (40) mit den Kraftaufnahmeflächen (111) der Spann-und Positionierbolzen (110) in Kontakt bringbar und dadurch die Axialkräfte (Fₐₓ) und die Radialkräfte (F_{rad}) auf die Spann- und Positionierbolzen (110) aufbringbar sind,
wobei die Spindel (30) und die Spannbacken (40) entlang einer einzigen festgelegten Bewegungsachse (A) verschiebbar sind,
wobei die Spindel wenigstens ein Gewinde (31) aufweist, und derart mit den beiden Spannbacken (40) wirkverbunden ist, dass eine Rotation der Spindel eine Bewegung der Spannbacken (40) in Richtung der Bewegungsachse (A) aufeinander zu oder voneinander fort bewirkt,
wobei die Spindel einen Spindelkörper aufweist, an dessen einem Ende das Gewinde (31) angeordnet ist, welches in Eingriff mit einem Gewinde der ersten Spannbacke (40) steht, und an dessen gegenüberliegendem Ende ein Kopfabschnitt ausgebildet ist, der einen relativ zu dem Spindelkörper vergrößerten Durchmesser aufweist, und mit einer Anlagefläche an der zweiten Spannbacke (40) anliegt.

2. Spannvorrichtung nach Anspruch 1, wobei das Spannmittel (30) unmittelbar und ausschließlich mit den Spannbacken (40) in Wirkverbindung steht, um diese aufeinander zu oder voneinander fort zu bewegen.

3. Spannvorrichtung nach einem der vorhergehenden Ansprüche, **dadurch gekennzeichnet, dass** die Bezugsebenenplatte (10) einen ersten Satz von Spannöffnungen (20) in einem ersten Raster mit einem Rasterabstand R_{A} x R_{A} aufweist, und einen zweiten Satz von Spannöffnungen (20) in einem zweiten Raster mit einem Rasterabstand R_{B} x R_{B}, wobei der Rasterabstand R_{B} x R_{B} des zweiten Rasters verschieden ist von dem Rasterabstand R_{A} x R_{A} des ersten Rasters.

4. Spannvorrichtung nach einem der vorhergehenden Ansprüche, **dadurch gekennzeichnet, dass** die Spann- und Positionierbolzen (110) in Bezug auf die Spannöffnungen (20) kein Übermaß aufweisen, sondern vorzugsweise ein Untermaß, wobei vorzugsweise die Spann- und Positionierbolzen (110) in Bezug auf ihre Radialrichtung elastisch federnd ausgebildet sind, und/oder
der maximale Federhub der Spann- und Positionierbolzen (110) größer ist als der Abstand der Positionierflächen (113) der Spann- und Positionierbolzen (110) von den Bezugsflächen (22).

5. Spannvorrichtung nach einem der vorstehenden Ansprüche, wobei die Kraftübertragungsflächen (41) und die Kraftaufnahmeflächen (111) im verspannten Zustand an einer Kontaktfläche miteinander in Kontakt stehen, wobei an der Kontaktfläche eine in Richtung einer Flächennormale der Kontaktfläche weisende Kraft übertragbar ist, wobei die Kraft die Vektorsumme einer Radialkraft und einer Axialkraft ist, wobei die Kraft einen ersten Winkel mit einer parallel zu der Bewegungsachse (A) und orthogonal zu der Bezugsebene angeordneten Vertikalebene einschließt, und einen zweiten Winkel mit der Bezugsebene einschließt, wobei der erste Winkel vorzugsweise zwischen 20° und 70° beträgt, und/oder der zweite Winkel vorzugsweise zwischen 20° und 70° beträgt.

6. Spannvorrichtung nach einem der vorstehenden Ansprüche, wobei die Spannvorrichtung für jede Spannbacke (40) eine Rückstellfeder (32) aufweist, die derart mit ihrer jeweiligen Spannbacke (40) wirkverbunden ist, dass die Spannbacken (40) gegen die Rückstellkraft der Rückstellfedern (32) aufeinander zu bewegt werden.

7. Spannvorrichtung nach einem der vorstehenden Ansprüche,
wobei die Spannvorrichtung für eine, mehrere oder sämtliche der Spannöffnungen (20) eine in der Öffnung vorgesehene Abhebefeder aufweist, welche dazu eingerichtet ist, den Spann- und Positionierbolzen (110) entgegen seiner Einführungsrichtung aus der Spannöffnung (20) zumindest partiell heraus zu drücken, sobald der Verspannungszustand zwischen den Spannbacken (40) und den Spann- und Positionierbolzen (110) aufgehoben wird.

8. Spannvorrichtung nach einem der vorstehenden Ansprüche,
wobei die Spannvorrichtung für jede der Spannbacken (40) eine Ausnehmung aufweist, in der die Spannbacken (40) jeweils in Richtung der Bewegungsachse (A) geführt beweglich sind, insbesondere gleitbeweglich gelagert, und eine durchgehende Ausnehmung für das Spannmittel (30), in der das Spannmittel (30) berührungsfrei angeordnet wird.

9. Spannvorrichtung nach Anspruch 8,
wobei die Spannvorrichtung eine gegenüber der Spannfläche (15) angeordnete Gehäuseabdeckung aufweist, welche reversibel lösbar mit der Spannvorrichtung verbunden ist, und mittels welcher die Ausnehmungen für die Spannbacken (40) und das Spannmittel (30) zugänglich sind.

## Claims

1. Clamping device, in particular for clamping workpieces for machining, comprising a reference plane plate (10) having a planar clamping surface (15) defining a reference plane, and at least two clamping openings (20) with walls (21), on each of which at least one reference surface (22) is formed, wherein the clamping device serves for clamping a clamping plate (100) having a planar base surface (101) to be placed on the clamping surface (15) and at least two clamping and positioning pins (110) which are assigned to the clamping openings (20) and which each have a positioning surface (113) assigned to the reference surfaces (22), and comprising a tightening device (50) which is configured to apply an axial force (Fax) and a superimposed radial force (Frad) to the clamping and positioning pins (110), wherein by means of the axial force (Fax) the base surface (101) of the clamping plate (100) can be pressed against the clamping surface (15) of the reference plane plate (10), and by means of the radial force (Frad) the clamping and positioning pins (110) can be pressed with their positioning surfaces (113) against the reference surfaces (22), wherein the tightening device (50) comprises two clamping jaws (40) and a clamping means (30) configured as a spindle, wherein for each clamping and positioning pin (110) a force-transmission surface (41) is provided on one of the clamping jaws (40), wherein each clamping and positioning pin (110) has a force-receiving surface (111) for cooperating with one of the force-transmission surfaces (41), wherein the force-transmission surfaces (41) of the clamping jaws (40) can be brought into contact with the force-receiving surfaces (111) of the clamping and positioning pins (110) and, as a result, the axial forces (Fax) and the radial forces (Frad) can be applied to the clamping and positioning pins (110), wherein the spindle (30) and the clamping jaws (40) are displaceable along a single defined movement axis (A), wherein the spindle has at least one thread (31) and is operatively connected to the two clamping jaws (40) such that a rotation of the spindle causes a movement of the clamping jaws (40) in the direction of the movement axis (A) towards one another or away from one another, **characterized in that** the spindle has a spindle body, at one end of which the thread (31) is arranged, which is in engagement with a thread of the first clamping jaw (40), and at the opposite end of which a head section is formed, which has a diameter enlarged relative to the spindle body, and bears with a contact surface against the second clamping jaw (40).

2. Clamping device according to claim 1, wherein the clamping means (30) is operatively connected directly and exclusively to the clamping jaws (40) in order to move them towards one another or away from one another.

3. Clamping device according to any one of the preceding claims, **characterized in that** the reference plane plate (10) has a first set of clamping openings (20) in a first grid with a grid spacing $R_A \times R_A$, and a second set of clamping openings (20) in a second grid with a grid spacing $R_B \times R_B$, wherein the grid spacing $R_B \times R_B$ of the second grid is different from the grid spacing $R_A \times R_A$ of the first grid.

4. Clamping device according to any one of the preceding claims, **characterized in that** the clamping and positioning pins (110) have no oversize with respect to the clamping openings (20), but preferably an undersize, wherein preferably the clamping and positioning pins (110) are designed to be elastically resilient with respect to their radial direction, and/or the maximum spring travel of the clamping and positioning pins (110) is greater than the distance of the positioning surfaces (113) of the clamping and positioning pins (110) from the reference surfaces (22).

5. Clamping device according to any one of the preceding claims, wherein the force-transmission surfaces (41) and the force-receiving surfaces (111), in the clamped state, are in contact with one another at a contact surface, wherein a force directed in the direction of a surface normal of the contact surface is transmittable at the contact surface, wherein the force is the vector sum of a radial force and an axial force, wherein the force includes a first angle with a vertical plane arranged parallel to the movement axis (A) and orthogonal to the reference plane, and includes a second angle with the reference plane, wherein the first angle is preferably between 20° and 70°, and/or the second angle is preferably between 20° and 70°.

6. Clamping device according to any one of the preceding claims, wherein the clamping device has, for each clamping jaw (40), a return spring (32), which is operatively connected to its respective clamping jaw (40) such that the clamping jaws (40) are moved towards one another against the return force of the return springs (32).

7. Clamping device according to any one of the preceding claims, wherein the clamping device has, for one, several or all of the clamping openings (20), a lift-off spring provided in the opening, which is configured to push the clamping and positioning pin (110) at least partially out of the clamping opening (20) against its insertion direction, as soon as the clamped state between the clamping jaws (40) and the clamping and positioning pins (110) is released.

8. Clamping device according to any one of the preceding claims, wherein the clamping device has, for each of the clamping jaws (40), a recess in which the clamping jaws (40) are each movably guided in the direction of the movement axis (A), in particular slidably mounted, and a continuous recess for the clamping means (30), in which the clamping means (30) is arranged in a contact-free manner.

9. Clamping device according to claim 8, wherein the clamping device has a housing cover arranged opposite the clamping surface (15), which is reversibly detachably connected to the clamping device, and by means of which the recesses for the clamping jaws (40) and the clamping means (30) are accessible.

## Revendications

1. Dispositif de serrage, en particulier pour le serrage de pièces à usiner destinées à l'usinage, comprenant une plaque à plan de référence (10) présentant une surface de serrage (15) plane définissant un plan de référence, et au moins deux ouvertures de serrage (20) avec des parois (21), sur chacune desquelles est formée au moins une surface de référence (22), le dispositif de serrage servant à serrer une plaque de serrage (100) présentant une surface de base (101) plane destinée à être posée sur la surface de serrage (15) et au moins deux goujons de serrage et de positionnement (110) qui sont associés aux ouvertures de serrage (20) et qui présentent chacun une surface de positionnement (113) associée aux surfaces de référence (22), et comprenant un mécanisme de serrage (50) configuré pour appliquer aux goujons de serrage et de positionnement (110) une force axiale (Fax) et une force radiale (Frad) superposée, dans lequel, au moyen de la force axiale (Fax), la surface de base (101) de la plaque de serrage (100) peut être pressée contre la surface de serrage (15) de la plaque à plan de référence (10), et au moyen de la force radiale (Frad), les goujons de serrage et de positionnement (110) peuvent être pressés avec leurs surfaces de positionnement (113) contre les surfaces de référence (22), dans lequel le mécanisme de serrage (50) comprend deux mors de serrage (40) et un moyen de serrage (30) configuré en broche, dans lequel, pour chaque goujon de serrage et de positionnement (110), une surface de transmission de force (41) est prévue sur l'un des mors de serrage (40), dans lequel chaque goujon de serrage et de positionnement (110) présente une surface de réception de force (111) destinée à coopérer avec l'une des surfaces de transmission de force (41), dans lequel les surfaces de transmission de force (41) des mors de serrage (40) peuvent être amenées en contact avec les surfaces de réception de force (111) des goujons de serrage et de positionnement (110) et, de ce fait, les forces axiales (Fax) et les forces radiales (Frad) peuvent être appliquées aux goujons de serrage et de positionnement (110), dans lequel la broche (30) et les mors de serrage (40) sont déplaçables le long d'un seul axe de déplacement (A) défini, dans lequel la broche présente au moins un filetage (31) et est reliée fonctionnellement aux deux mors de serrage (40) de telle sorte qu'une rotation de la broche provoque un déplacement des mors de serrage (40) l'un vers l'autre ou l'un loin de l'autre dans la direction de l'axe de déplacement (A), **caractérisé en ce que** la broche présente un corps de broche, à l'une des extrémités duquel est disposé le filetage (31), lequel est en prise avec un filetage du premier mors de serrage (40), et à l'extrémité opposée duquel est formée une section de tête présentant un diamètre agrandi par rapport au corps de broche, et qui s'appuie par une surface d'appui contre le second mors de serrage (40).

2. Dispositif de serrage selon la revendication 1, dans lequel le moyen de serrage (30) est relié fonctionnellement directement et exclusivement aux mors de serrage (40) afin de les déplacer l'un vers l'autre ou l'un loin de l'autre.

3. Dispositif de serrage selon l'une des revendications précédentes, **caractérisé en ce que** la plaque à plan de référence (10) présente un premier ensemble d'ouvertures de serrage (20) dans une première grille avec un espacement de grille $R_A \times R_A$, et un second ensemble d'ouvertures de serrage (20) dans une seconde grille avec un espacement de grille $R_B \times R_B$, l'espacement de grille $R_B \times R_B$ de la seconde grille étant différent de l'espacement de grille $R_A \times R_A$ de la première grille.

4. Dispositif de serrage selon l'une des revendications précédentes, **caractérisé en ce que** les goujons de serrage et de positionnement (110) ne présentent pas de surcote par rapport aux ouvertures de serrage (20), mais de préférence une sous-cote, dans lequel de préférence les goujons de serrage et de positionnement (110) sont réalisés de manière élastiquement souple par rapport à leur direction radiale, et/ou la course de ressort maximale des goujons de serrage et de positionnement (110) est supérieure à la distance entre les surfaces de positionnement (113) des goujons de serrage et de positionnement (110) et les surfaces de référence (22).

5. Dispositif de serrage selon l'une des revendications précédentes, dans lequel les surfaces de transmission de force (41) et les surfaces de réception de force (111), à l'état serré, sont en contact l'une avec l'autre au niveau d'une surface de contact, dans lequel une force orientée dans la direction d'une normale à la surface de contact peut être transmise au niveau de la surface de contact, la force étant la somme vectorielle d'une force radiale et d'une force axiale, la force formant un premier angle avec un plan vertical disposé parallèlement à l'axe de déplacement (A) et orthogonalement au plan de référence, et formant un second angle avec le plan de référence, le premier angle étant de préférence compris entre 20° et 70°, et/ou le second angle étant de préférence compris entre 20° et 70°.

6. Dispositif de serrage selon l'une des revendications précédentes, dans lequel le dispositif de serrage présente, pour chaque mors de serrage (40), un ressort de rappel (32) qui est relié fonctionnellement à son mors de serrage (40) respectif de telle sorte que les mors de serrage (40) sont déplacés l'un vers l'autre à l'encontre de la force de rappel des ressorts de rappel (32).

7. Dispositif de serrage selon l'une des revendications précédentes, dans lequel le dispositif de serrage présente, pour une, plusieurs ou l'ensemble des ouvertures de serrage (20), un ressort de levage prévu dans l'ouverture, qui est configuré pour repousser au moins partiellement le goujon de serrage et de positionnement (110) hors de l'ouverture de serrage (20) à l'encontre de sa direction d'introduction, dès que l'état de serrage entre les mors de serrage (40) et les goujons de serrage et de positionnement (110) est supprimé.

8. Dispositif de serrage selon l'une des revendications précédentes, dans lequel le dispositif de serrage présente, pour chacun des mors de serrage (40), un évidement dans lequel les mors de serrage (40) sont respectivement guidés de manière mobile dans la direction de l'axe de déplacement (A), en particulier montés à déplacement coulissant, et un évidement continu pour le moyen de serrage (30), dans lequel le moyen de serrage (30) est disposé sans contact.

9. Dispositif de serrage selon la revendication 8, dans lequel le dispositif de serrage présente un couvercle de boîtier disposé à l'opposé de la surface de serrage (15), lequel est relié de manière détachable et réversible au dispositif de serrage, et au moyen duquel les évidements pour les mors de serrage (40) et le moyen de serrage (30) sont accessibles.
